(19) **Europäisches Patentamt**

**European Patent Office**

**Office européen des brevets**

(11) **EP 0 898 380 B1**

(12) **EUROPÄISCHE PATENTSCHRIFT**

(45) Veröffentlichungstag und Bekanntmachung des Hinweises auf die Patenterteilung:
**01.10.2003 Patentblatt 2003/40**

(51) Int Cl.$^7$: **H04B 3/50**, H04Q 11/04, H04M 1/72

(21) Anmeldenummer: **97810577.3**

(22) Anmeldetag: **18.08.1997**

(54) **Schaltungsanordnung für eine digitale Telekommunikations-Verbindung zwischen einer Zentrale und mindestens einem Endgerät**

Circuit for a digital telecommunications link between a central station and at least one terminal station

Circuit pour une liaison de télécommunication entre une station centrale et au moins une station terminale

(84) Benannte Vertragsstaaten:
**CH DE ES FR GB IT LI**

(43) Veröffentlichungstag der Anmeldung:
**24.02.1999 Patentblatt 1999/08**

(73) Patentinhaber: **ASCOM BUSINESS SYSTEMS AG CH-4503 Solothurn (CH)**

(72) Erfinder:
• **Burschka, Stefan**
  **3122 Kehrsatz (CH)**

• **Stuber, Daniel**
  **4552 Derendingen (CH)**

(74) Vertreter:
**Roshardt, Werner Alfred, Dipl.-Phys. et al**
**Keller & Partner**
**Patentanwälte AG**
**Schmiedenplatz 5**
**Postfach**
**3000 Bern 7 (CH)**

(56) Entgegenhaltungen:
**DE-A- 3 630 529**      **US-A- 4 776 006**

EP 0 898 380 B1

## Beschreibung

### Technisches Gebiet

Die Erfindung betrifft eine Schaltungsanordnung für eine digitale Telekommunikationsverbindung zwischen einer Zentrale und mindestens einem Endgerät unter Verwendung von insbesondere konventionellen Zweidraht-Leitungen, wobei die Endgeräte mit einem systemweit vorgegebenen Abschluss ausgestattet sind, wobei der Abschluss eine Impedanz aufweist, die für sich betrachtet eine Unteranpassung einer die Zentrale und das jeweilige Endgerät verbindenden Leitung darstellt.

### Stand der Technik

Die digitale Kommunikation eröffnet Möglichkeiten, die mit der analogen nicht annähernd erreicht werden können. Dies ist ein wesentlicher Grund für ihre schnelle Verbreitung. Für den Benutzer, welcher von einer analogen auf eine digitale Anlage umsteigen will, stellt sich natürlich die Frage, ob die Kosten der Umstellung in einem für ihn akzeptablen Verhältnis zum Nutzen stehen. Um dieses Verhältnis möglichst günstig gestalten zu können, wird der Anbieter der digitalen Anlagen bestrebt sein, die beim Käufer bereits vorhandenen Leitungen zu nutzen. Hier stellt sich allerdings das Problem, dass der ISDN-Standard Vierdraht-Leitungen zwischen den Geräten vorsieht, während die bekannten analogen Verbindungen auf Zweidraht-Leitungen beruhen.

Die US 4,776,006 beschreibt Endgeräte, welche mit den bestehenden Zweidraht-Leitungen betrieben werden können. Die Masterstation ist mit einer Impedanzanpassung versehen. Die an der Masterstation angeschlossenen Endgeräte haben eine verhältnismässig hohe Impedanz. Für die Übertragung von Daten ist ein zusätzliches Frequenzband vorgesehen.

Bei Hausanlagen, bei denen alle Endgeräte zu einer bestimmten Produktefamilie gehören, wurde deshalb vielfach auf die exakte Einhaltung des ISDN-Standards verzichtet, um anstelle der Vierdraht-Leitungen Zweidraht-Leitungen benutzen zu können.

Die bisher bekannten Lösungen haben jedoch alle gewisse Nachteile z.B. fest installierte Abschlüsse und damit kein Bus-System; nur ein Endgerät pro Leitung; nur ein einziger digitaler Kanal (D-Kanal); kompliziertes Protokoll; hoher Hardwareaufwand und folglich hohe Kosten.

### Darstellung der Erfindung

Aufgabe der Erfindung ist es, eine Schaltungsanordnung der eingangs genannten Art anzugeben, welche kostengünstig und benutzerfreundlich ist.

Die Lösung der Aufgabe ist durch die Merkmale des Anspruchs 1 definiert. Gemäss der Erfindung werden die (bestehenden) Leitungen selbst nicht abgeschlossen. Die Zentrale (Hauszentrale) ist sowohl im Sende- als auch im Empfangsmodus impedanzmässig angepasst. Die Endgeräte (Telefonapparate, Telefonendgeräte, etc.) dagegen weisen je für sich betrachtet eine Impedanz auf, die zu einer Unteranpassung führt. Werden zwei (oder mehr) Endgeräte gleichzeitig an der Leitung betrieben, dann ergibt sich dagegen eine (leichte) Überanpassung.

Aus der Sicht des Benutzers können die digitalen Endgeräte in gleicher Weise wie die früheren analogen Geräte an die bestehenden Leitungen angeschlossen werden. Es ist nicht erforderlich, die Installationen zu ändern.

Die Fehlanpassung der Endgeräte hält sich innerhalb eines kontrollierten Bereichs und die dadurch bedingten Reflexionen werden von der Zentrale gleichsam abgefangen. Der kostenmässige Vorteil liegt auf der Hand: Die Endgeräte können ziemlich einfach und preiswert gebaut werden. Die Anpassung muss nur in einem Gerät der Anlage (nämlich in der Zentrale) durchgeführt werden.

Gemäss einer bevorzugten Ausführungsform verfügt die Zentrale über eine digitale Umschaltung, um zwischen Sende- und Empfangsimpedanz umschalten zu können.

Im einfachsten Fall ist die Schaltungsanordnung so ausgelegt, dass wahlweise ein einzelnes oder gleichzeitig maximal zwei Endgeräte über eine (verzweigte) Leitung an einem Port der Zentrale angeschlossen werden können. Die Impedanzen der Endgeräte sind vorzugsweise so gewählt, dass die Empfangsimpedanz $ZE$ grösser als $1.5 Z0$ ($Z0$ = Wellenwiderstand der Leitung) und die Sendeimpedanz $ZS$ kleiner als $0.8 Z0$ ist. Als besonders geeignet haben sich folgende Werte erwiesen: $ZE = 1.8 Z0$, $ZS = 0.65 Z0$.

Die erfindungsgemässe Schaltungsanordnung ist für lokale geographisch beschränkte Anlagen bestimmt. Als Leitung wird eine typischerweise bereits bestehende Zweidraht-Leitung einer Länge von maximal 1'200 m verwendet. Der Drahtdurchmesser kann unter 0.5 mm (z.B. bei ca. 0.4 mm) liegen. Mit anderen Worten: Die Erfindung verwendet die konventionellen Zweidraht- und nicht die dem ISDN-Standard entsprechenden Vierdraht-Leitungen. Für die Signalisierung eignen sich die an sich bekannten AMI-Signale, bei denen jedes Bit durch eine ausgeglichene Kombination von einem positivem und einen negativen Puls übertragen wird. Die relative Pulsbreite sollte zwischen 60% und 80% liegen. Bei höheren Werten wird mehr Energie als nötig übertragen, d.h. die zusätzliche Energie schlägt sich nicht in einem entsprechenden Gewinn der Detektionsqualität nieder.

Damit die Signalaufbereitung in den Empfängern möglichst einfach gestaltet werden kann, werden die empfangenen Signale zunächst durch ein Pulsbreitenfilter verarbeitet, welches nur Pulse einer vorgegebenen minimalen Länge durchlässt. Die Länge liegt vorzugsweise über 500 ns, z.B. bei etwa 750 ns. Es wurde nämlich festgestellt, dass die meisten Störungen, die auf Zweidraht-Telefonleitungen auftreten bzw. in diese eingekoppelt werden, kürzer als 500 ns sind.

Die Übertragung der Benutzerdaten und der üblichen Kontrollinformation bzw. Steuerdaten erfolgt in einem Frequenzbereich, der durch ein vorgegebenes Frequenzband vom Sprachband (< 40 KHz) getrennt ist. Allfällige analoge Sprachsignale können somit die digitale Übertragung nicht stören. Das Frequenzband für die Übertragung der Benutzerdaten beginnt z.B. bei etwa 250 KHz und umfasst mindestens die dritte Oberwelle der Grundfrequenz.

Entsprechend einer besonders bevorzugten Ausführungsform wird das Frequenzband zwischen dem Sprachband und dem Übertragungsband für Steuersignale verwendet, die unabhängig vom aktuellen Zustand des Endgerätes empfangen werden können. Mit dieser sogenannten Out-of-band Signalisierung können z.B. selektive Reset-Signale oder Signale zur Durchführung von Funktionen, die nicht zum Protokoll der digitalen (ISDN) Übertragung gehören, ausgetauscht werden.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1    Eine schematische Darstellung einer erfindungsgemässen Schaltungsanordnung;

Fig. 2    eine schematische Darstellung einer erfindungsgemässen Aufteilung des Frequenzbereichs.

**Wege zur Ausführung der Erfindung**

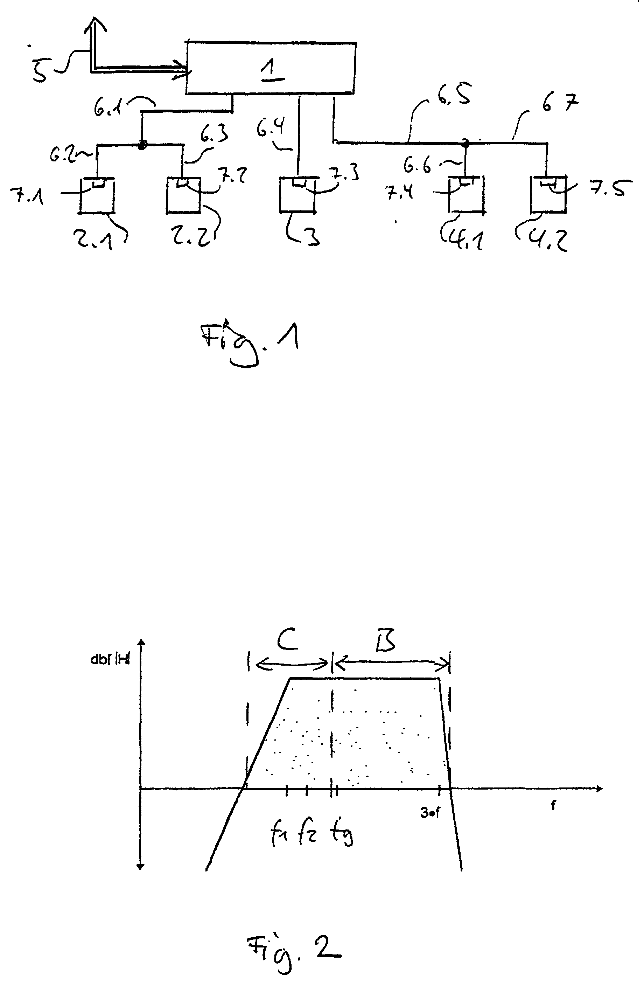

Fig. 1 zeigt beispielhaft ein Blockschaltbild einer Hausanlage. Eine Zentralenbaugruppe 1 verbindet eine Mehrzahl von hausinternen Endgeräten 2.1, 2.2, 3, 4.1, 4.2 untereinander und mit einem externen Netzwerk. Die Leitung 5 zum (nicht dargestellten) externen Netzwerk ist entsprechend dem relevanten ISDN-Standard (z.B. als Vierdraht-Leitung) ausgeführt. Sie ist hier nicht weiter von Interesse.

Als hausinterne Leitungen 6.1 bis 6.7 können gemäss der Erfindung bereits bestehende oder neue 0.4 mm Zweidraht-Leitungen (wie sie schon lange in der analogen Telekommunikation üblich sind) verwendet werden. Sie sind entsprechend den installationsmässigen Gegebenheiten unterschiedlich lang. So kann die Leitung 6.4 z.B. wenige 10 m lang, die Leitung 6.5 dagegen ohne weiteres mehrere 100 m lang sein. Das im vorliegenden Beispiel gezeigte System ist darauf ausgelegt, dass Leitungslängen bis zu ca. 1'200 m eingesetzt werden können, ohne dass im Einzelfall besondere (bzw. zusätzliche) Massnahmen erforderlich wären. Ein sich namentlich kostenmässig auswirkender Vorteil besteht darin, dass die Leitungen 6.1 bis 6.7 selbst nicht abgeschlossen sind bzw. sein müssen. Bestehende Leitungen aus früheren analogen Anlagen können also unverändert übernommen werden (solange die systemmässig vorgegebene maximale Leitungslänge nicht überschritten wird).

Die Endgeräte 2.1, 2.2, 3, 4.1, 4.2 funktionieren völlig unabhängig voneinander, obwohl wahlweise ein oder zwei Endgeräte an einem Port der Zentralenbaugruppe 1 angeschlossen sein können. In Fig. 1 sind z.B. einerseits die Endgeräte 2.1, 2.2 über die gemeinsame Leitung 6.1 und andererseits die Endgeräte 4.1, 4.2 über die gemeinsame Leitung 6.5 angeschlossen. Das Endgerät 3 ist einzeln über die Leitung 6.4 mit der Zentralenbaugruppe 1 verbunden.

Über die Leitungen 6.1 bis 6.7 werden Nutzinformation (digitalisierte Sprachsignale, Benutzerdaten etc.), Signalisierung und Versorgungsspannung gleichzeitig übertragen. Eine einzige konventionelle Zweidraht-Leitung kann bidirektional und voneinander unabhängig zwei 64 KBit/s B-Kanäle und zwei 32 KBit/s D-Kanäle unterstützen. (Signalisierungs- und Benutzerinformation werden in den D-Kanälen übertragen.)

Die Endgeräte 2.1, 2.2, 3, 4.1, 4.2 können Telefonapparate, Telefaxgeräte, Modems etc. sein. Sie können vorzugsweise über möglichst geringe "Intelligenz" verfügen (d.h. sie sind als Low-End-Geräte ohne Mikroprozessor-Steuerung ausgeführt), damit der Hardwareaufwand minimal gehalten werden kann. Die Steuerung und die Kontrolle sind im wesentlichen bei der Zentralenbaugruppe 1. Der Schaltungsanordnung liegt also ein sogenanntes Master/Slave-Konzept zugrunde.

Wie bereits erwähnt, verfügen die Leitungen 6.1 bis 6.7 selbst über keine Abschlüsse. Diese sind vielmehr in den Endgeräten 2.1, 2.2, 3, 4.1, 4.2 bzw. in der Zentralenbaugruppe 1 enthalten. Gemäss der Erfindung ist nur die Zentralenbaugruppe 1 (genau) an die Leitungen angepasst. D.h. nur die Zentrale sendet und empfängt angepasst an den jeweiligen Wellenwiderstand der Leitung. Die Abschlüsse in den Endgeräten 2.1, 2.2, 3, 4.1, 4.2 dagegen weichen von der idealen Anpassung um einen bestimmten Wert ab. Die (beschränkte) Fehlanpassung kann bekanntlich zu Signalechos führen. Bei der erfindungsgemässen Schaltungsanordnung werden diese Echos aber von der Zentralenbaugruppe 1 unterdrückt.

Die in den Endgeräten 2.1, 2.2, 3, 4.1, 4.2 eingebauten Abschlüsse 7.1 bis 7.5 sind gezielt so gewählt, dass beim Anschliessen eines einzigen Endgerätes (empfangsseitig) eine Unteranpassung, beim gleichzeitigen Anschliessen von zwei Endgeräten dagegen (empfangsseitig) eine leichte Überanpassung (von z.B. ca. 10 %) resultiert. (Sendeseitig gilt ZS < Z0.) Beim vorliegenden Ausführungsbeispiel haben sich folgende Verhältnisse als optimal erwiesen:

$$ZE(\text{Endgerät}) = 1.8*Z0$$

$$ZS(\text{Endgerät}) = 0.65*Z0$$

Zwischen Sende- und Empfangsimpedanz wird digital umgeschaltet. Auf diese Weise wird eine maximale Signalstärke bei minimaler Fehlanpassung erreicht. Sind zwei Endgeräte (2.1, 2.2) angeschlossen, bilden sie ein System dessen Empfangsimpedanz mit 0.9*Z0 nahezu an Z0 angepasst ist. Trotz der (durch die Fehlanpassung bedingten) reduzierten Signalstärke bleibt das SNR nahezu konstant, da auch die Welligkeit sinkt.

Mit Bezugnahme auf Fig. 2 soll die Signalisierung erläutert werden, welche dazu beiträgt, dass die Zuverlässigkeit der Signalübertragung trotz der nicht optimalen Anpassung der Endgeräte gewährleistet ist.

Die Signalisierung erfolgt in einem Frequenzbereich oberhalb 40 KHz. Im vorliegenden Beispiel wird zur Übertragung der System- und Benutzerdaten ein AMI-Signal (AMI = Alternate Mark Inverse) mit einer Grundfrequenz fg von 256 KHz verwendet. Das Basisband B endet mit Vorteil bei der dritten Oberwelle 3*fg. Auf diese Weise werden dispersive Effekte auf der Leitung und EMV-Störungen minimiert. Die folglich beschränkte Sendeleistung wirkt sich positiv auf den Stromverbrauch aus. Indem die Übertragungsfunktion bei 40 KHz endet, werden NF-Signale systematisch ausgefiltert.

Gemäss einer besonders bevorzugten Ausführungsform wird der Frequenzbereich C zwischen 256 KHz und 40 KHz für die sogenannte Out-of-band Signalisierung verwendet. D.h. es können unabhängig von den bestehenden B- und D-Kanälen z.B. selektive Layer-1 Reset Signale ausgesendet werden (vgl. Frequenzen f1, f2 in Fig. 2). Dies ist namentlich dann wichtig, wenn an einer Leitung gleichzeitig zwei Endgeräte angeschlossen sind bzw. werden. Die Zentrale 1 kann dann an eines der beiden Endgeräte nach Bedarf einen Reset-Befehl senden, ohne dass die Kommunikation mit dem zweiten Endgerät dadurch gestört wird.

Die in Fig. 2 dargestellte Übertragungsfunktion nebst Anpassung, EMC und Betriebsspannungsversorgung werden von einem kostengünstigen 2:1 Übertrager bewerkstelligt.

Das besonders bevorzugte 62.5% AMI-Signal (d.h. bei 2 μs pro Bit im vorliegenden Beispiel: Pulsbreite = 1.25 μs) schafft einen guten Ausgleich zwischen Sendeleistung, Welligkeit und Stromverbrauch.

Eine weitere vorteilhaft einfache Massnahme als Schutz gegen Störungen jeglicher Art auf der Leitung ist ein digitales Pulsbreitenfilter. Es trennt die interessierenden Signal-Pulse von den meisten Störungen, da es sich zeigt, dass die typischen Störsignale auf den bekannten Zweidraht-Leitungen meistens nur kurze Pulse sind. Im vorliegenden Beispiel wird das Pulsbreitenfilter vorzugsweise auf ca. 750 ns eingestellt. Zusätzlich wird zwischen dem Senden und Empfangen eine Sperrzeit (Guardtime) von z.B. 3.2 μs eingeführt. Diese Sperrzeit ist entsprechend der im jeweiligen System minimalen Antwortzeit eines anderen, an der gleichen Leitung angeschlossenen Gerätes festgelegt.

Ein 8 KHz Ping-Pong-Verfahren mit spezieller Codierung und Signalisation bewirkt sowohl die Synchronisation der Kommunikationspartner als auch eine hohe Datenintegrität. Unabhängig von der Anzahl der Endgeräte ist im Vergleich zu bekannten Systemen kein gesonderter Impedanzabschluss der gemeinsamen Leitung (z.B. 6.1, 6.5) erforderlich. Die Beseitigung von leitungsbezogenen Störungen wird im wesentlichen durch die Zentralenbaugruppe vorgenommen. Durch das Zusammenwirken eines bandbegrenzten Sendesignals und eines gezielt gewählten Verhältnisses der Sende- und Empfangsimpedanz, mit den dadurch festgelegten Signalpegeln, werden die Welligkeit auf der Leitung und die leitungsgebundene Abstrahlung verringert.

Die Endgeräte arbeiten vorzugsweise mit einer fest vorgegebenen Schwelle für die Detektion der Signale. Zur Verbesserung der Detektionssicherheit kann ein 2-Schwellen-System vorgesehen sein. D.h. jedes Endgerät kann zwischen zwei Schwellen umgeschaltet werden entsprechend den Erfordernissen des Einzelfalls (Leitungsqualität, Leitungslänge, Störsignale etc.). Das Umschalten wird von der Zentrale her gesteuert. Bei der Inbetriebnahme eines Endgerätes sendet die Zentrale z.B. alle 10 s ein spezifisches Out-of-band Signal an das fragliche Endgerät, um die Schwelle umzuschalten. Sobald das Ergebnis befriedigend ist, wird die Schwelle nicht mehr geändert.

Zusammenfassend ist festzustellen, dass die Erfindung die beim Stand der Technik vorhandenen Probleme vermeidet und mit geringem Hardwareaufwand eine hohe Benutzerfreundlichkeit aufweist. Wahlweise können ein oder zwei Endgeräte über eine gemeinsame, busfähige Zweidraht-Leitung mit der Hauszentrale verbunden werden. Installationsmässig können die erfindungsgemässen digitalen Endgeräte wie konventionelle analoge Geräte behandelt werden.

**Patentansprüche**

1. Schaltungsanordnung für eine digitale Telekommunikationsverbindung zwischen einer Zentrale (1) und mindestens einem Endgerät (2.1, 2.2, 3, 4.1, 4.2) unter Verwendung von Zweidraht-Leitungen, wobei die Endgeräte (2.1, 2.2, 3, 4.1, 4.2) mit einem systemweit vorgegebenen Abschluss (7.1 bis 7.5) ausgestattet sind, wobei der Abschluss (7.1 bis 7.5) eine Impedanz aufweist, die für sich betrachtet eine Unteranpassung einer die Zentrale (1) und das jeweilige Endgerät (2.1, 2.2, 3, 4.1, 4.2) verbindenden Leitung (6.1 bis 6.7) darstellt, **dadurch gekennzeichnet, dass**

a) der Abschluss (7.1 bis 7.5) eines jeden Endgerätes ferner so gewählt ist, dass die Impedanz bei mindestens zwei Endgeräten (2.1, 2.2; 4.1, 4.2) an einer gemeinsamen Leitung (6.1; 6.5) eine Überanpassung darstellt, und dass

b) die Zentrale (1) sowohl im Sende- als auch im Empfangsmodus an die Leitung (6.1 bis 6.7) impedanzmässig angepasst ist.

2. Schaltungsanordnung nach Anspruch 1, **dadurch gekennzeichnet, dass** die Zentrale (1) über eine digitale Umschaltung verfügt, um zwischen angepasster Sende- und Empfangsimpedanz umschalten zu können.

3. Schaltungsanordnung nach einem der Ansprüche 1 oder 2, **dadurch gekennzeichnet, dass** bei einem Wellenwiderstand Z0 der Leitung der Abschluss (7.1 bis 7.5) der Endgeräte eine Empfangsimpedanz ZE> 1.5 Z0, insbesondere ZE = 1.8 Z0, und eine Sendeimpedanz ZS < 0.8 Z0, insbesondere ZS = 0.65 Z0 aufweist.

4. Schaltungsanordnung nach einem der Ansprüche 1 bis 3, **dadurch gekennzeichnet, dass** die Endgeräte (2.1, 2.2, 3, 4.1, 4.2) mit der Zentrale (1) durch Zweidraht-Leitungen (6.1 bis 6.7) einer Länge von jeweils maximal 1'200 m und einem Drahtdurchmesser von weniger als 0.5 mm verbunden sind.

5. Schaltungsanordnung nach einem der Ansprüche 1 bis 4, **dadurch gekennzeichnet, dass** die Zentrale (1) und die Endgeräte (2.1, 2.2, 3, 4.1, 4.2) zur Signalisierung eines AMI-Signals mit einer relativen Pulsbreite von 60% bis 80%, insbesondere von 62.5% ausgebildet sind.

6. Schaltungsanordnung nach Anspruch 5, **dadurch gekennzeichnet, dass** Zentrale (1) und Endgeräte (2.1, 2.2, 3, 4.1, 4.2) mit einem digitalen Pulsbreitenfilter mit einer fest vorgegebenen Pulsbreite und einer Sperrzeit ausgerüstet sind.

7. Schaltungsanordnung nach Anspruch 6, **dadurch gekennzeichnet, dass** die Pulsbreite des Pulsbreitenfilters grösser als 500 ns, insbesondere etwa 750 ns, und dass die Sperrzeit zwischen dem Senden und Empfangen grösser als 3 μs, insbesondere etwa 3.2 μs beträgt.

8. Schaltungsanordnung nach einem der Ansprüche 5 bis 7, **dadurch gekennzeichnet, dass** Zentrale (1) und Endgeräte (2.1, 2.2, 3, 4.1, 4.2) zur Erzeugung und Detektion von Out-of-band Signalen im Bereich zwischen 40 KHz und der Grundfrequenz des AMI-Signals ausgebildet sind.

9. Schaltungsanordnung nach Anspruch 8, **dadurch gekennzeichnet, dass** Zentrale (1) und Endgeräte (2.1, 2.2, 3, 4.1, 4.2) zur Erzeugung und Detektion eines AMI-Signals in einem die Grundfrequenz und die dritte Oberwelle umfassenden Basisband ausgebildet sind.

**Claims**

1. Circuit arrangement for a digital telecommunications connection between a control centre (1) and at least one terminal (2.1, 2.2, 3, 4.1, 4.2) using two-wire lines, the terminals (2.1, 2.2, 3, 4.1, 4.2) being provided with a termination (7.1 to 7.5) which is present system-wide, the termination (7.1 to 7.5) having an impedance which constitutes per se an under-matching of a line (6.1 to 6.7), which connects the control centre (1) and the respective terminal (2.1, 2.2, 3, 4.1, 4.2), **characterised in that**

a) the termination (7.1 to 7.5) of each terminal is further selected so that the impedance constitutes an over-matching for at least two terminals (2.1, 2.2; 4.1, 4.2) on a common line (6.1; 6.5), and **in that**
b) the control centre (1) is matched to the line (6.1 to 6.7) in terms of impedance in both the transmission and receiving mode.

2. Circuit arrangement according to claim 1, **characterised in that** the control centre (1) has a digital switch-over device in order to be able to switch over between matched transmission and receiving impedance.

3. Circuit arrangement according to either claim 1 or 2, **characterised in that**, at a characteristic impedance Z0 of the line, the termination (7.1 to 7.5) of the terminals has a receiving impedance of ZE> 1.5 Z0, in particular ZE = 1.8 Z0, and a transmission impedance ZS< 0.8 Z0, in particular ZS = 0.65 Z0.

4. Circuit arrangement according to any one of claims 1 to 3, **characterised in that** the terminals (2.1, 2.2, 3, 4.1, 4.2) are connected to the control centre (1) by two-wire lines (6.1 to 6.7) each having a length of a maximum of 1,200 m and a wire diameter of less than 0.5 mm.

5. Circuit arrangement according to any one of claims 1 to 4, **characterised in that** the control centre (1) and the terminals (2.1, 2.2, 3, 4.1, 4.2) are constructed to signal an AMI signal having a relative pulse width of from 60% to 80%, in particular of 62.5%.

6. Circuit arrangement according to claim 5, **characterised in that** the control centre (1) and terminals (2.1, 2.2, 3, 4.1, 4.2) are provided with a digital pulse width filter having a rigidly predetermined pulse width and an off time.

7. Circuit arrangement according to claim 6, **characterised in that** the pulse width of the pulse width filter is greater than 500 ns, in particular approximately 750 ns, and **in that** the off time between transmission and receiving is greater than 3 µs, in particular approximately 3.2 µs.

8. Circuit arrangement according to any one of claims 5 to 7, **characterised in that** the control centre (1) and terminals (2.1, 2.2, 3, 4.1, 4.2) are constructed to generate and detect out-of-band signals in the range between 40 KHz and the basic frequency of the AMI signal.

9. Circuit arrangement according to claim 8, **characterised in that** the control centre (1) and terminals (2.1, 2.2, 3, 4.1, 4.2) are constructed to generate and detect an AMI signal in a base band which includes the basic frequency and the third harmonic frequency.

**Revendications**

1. Circuit pour une liaison numérique de télécommunication entre une station centrale (1) et au moins une station terminale (2.1, 2.2, 3, 4.1, 4.2) avec mise en oeuvre de lignes à deux fils, dans lequel les stations terminales (2.1, 2.2, 3, 4.1, 4.2) sont équipées d'un dispositif de terminaison (7.1 à 7.5) dédié, à l'échelle de l'ensemble du système, dans lequel le dispositif de terminaison (7.1 à 7.5) présente une impédance qui, considérée isolément, représente une adaptation insuffisante à une ligne (6.1 à 6.7) reliant la station centrale (1) et chacune des stations terminales (2.1, 2.2, 3, 4.1, 4.2), **caractérisé en ce que**

a) le dispositif de terminaison (7.1 à 7.5) d'une quelconque station terminale est en outre choisi de façon à ce que, au niveau d'au moins deux stations terminales (2.1, 2.2, 4.1, 4.2) sur une ligne commune (6.1, 6.5), l'impédance constitue une suradaptation et **en ce que**

b) la station centrale (1) est adaptée à la ligne (6.1 à 6.7) en fonction de l'impédance aussi bien en mode d'émission qu'en mode de réception.

2. Circuit selon la revendication 1 **caractérisé en ce que** la station centrale (1) dispose d'une commutation numérique permettant de commuter entre l'impédance d'émission et l'impédance de réception adaptée.

3. Circuit selon l'une quelconque des revendications 1 ou 2, **caractérisé en ce que**, pour une impédance d'onde Z0 de la ligne, le dispositif de terminaison (7.1 à 7.5) des stations terminales présente une impédance de réception ZR>1,5 Z0, particulièrement ZR = 1,8 Z0, et une impédance d'émission ZE < 0,8 Z0, particulièrement ZE = 0,65 Z0.

4. Circuit selon l'une quelconque des revendications 1 à 3 **caractérisé en ce que** les stations terminales (2.1, 2.2, 3, 4.1, 4.2) sont reliées à la station centrale (1) par des lignes à deux fils (6.1 à 6.7), chacune de celles-ci d'une longueur maximale de 1 200 m et d'un calibre de fil inférieur à 0,5 mm.

5. Circuit selon l'une quelconque des revendications 1 à 4 **caractérisé en ce que** la station centrale (1) et les stations terminales (2.1, 2.2, 3, 4.1, 4.2) sont configurées pour la signalisation d'un signal bipolaire d'une durée d'impulsion relative comprise entre 60% et 80%, particulièrement de 62,5%.

6. Circuit selon la revendication 5 **caractérisé en ce que** la station centrale (1) et les stations terminales (2.1, 2.2, 3, 4.1, 4.2) sont équipées d'un filtre numérique de durée d'impulsion avec durée d'impulsion et temps mort fixes prédéfinis.

7. Circuit selon la revendication 6 **caractérisé en ce que** la durée d'impulsion du filtre de durée d'impulsion est supérieure à 500 ns, particulièrement d'une durée d'impulsion d'approximativement 750 ns, et **caractérisé en ce que** le temps mort entre l'émission et la réception est supérieur à 3 µs, particulièrement d'une durée d'environ 3,2 µs.

8. Circuit selon l'une quelconque des revendications 5 à 7 **caractérisé en ce que** la station centrale (1) et les stations terminales (2.1, 2.2, 3, 4.1, 4.2) sont conçues pour générer et détecter des signaux hors bande dans la plage comprise entre 40 kHz et la fréquence fondamentale du signal bipolaire.

9. Circuit selon la revendication 8 **caractérisé en ce que** la station centrale (1) et les stations terminales (2.1, 2.2, 3, 4.1, 4.2) sont conçues pour générer et détecter un signal bipolaire dans une bande de base comprenant la fréquence fondamentale et la troi-

sième onde harmonique.

Fig. 1

Fig. 2